# EUROPÄISCHE PATENTANMELDUNG

(11) **EP 1 036 832 A1**
(43) Veröffentlichungstag der Anmeldung: **20.09.2000**
(21) Anmeldenummer: 00105681.1
(22) Anmeldetag: 16.03.2000
(51) Int. Cl.: C09D 11/02, C09D 5/02, C08J 3/12, C08J 3/05, C08F 6/22, C09D 125/14, C09D 133/08

(54) **Pulverkonzentrat zur Herstellung wässriger Dispersionslacke und Überdruckfarben**

(30) Priorität: 16.03.1999 DE 19911623
(71) Anmelder: Polymar GmbH, 27568 Bremerhaven (DE)
(72) Erfinder: Rausch, Sven, Dr., 28195 Bremen (DE); Setzermann, Uwe, Prof. Dr. Dr., 27751 Delmenhorst (DE)
(74) Vertreter: von Ahsen, Erwin-Detlef, Dipl.-Ing.

(57) **Zusammenfassung**

Konzentrat zur Herstellung wäßriger Dispersionslacke, -farben oder Coatings, Verfahren zum Herstellen des Konzentrats sowie Verwendung des Konzentrats zum Herstellen wäßriger Dispersionslacke, -farben oder Coatings

Konzentrate zur Herstellung wäßriger Dispersionslacke, -farben oder Coatings als Überdrucklacke bedruckter Erzeugnisse sind bisher nicht bekannt. Das erfindungsgemäße Konzentrat zur Herstellung wäßriger Dispersionslacke, -farben oder Coatings als Überdrucklacke für Beschichtungen bedruckter Erzeugnisse, insbesondere Etiketten und Kartonverpackungen enthält nach einem Lösungsgedanken einen pulverförmigen Bestandteil, der durch Trocknen einer wäßrigen Harz- oder Latexdispersion unterhalb ihrer minimalen Filmbildungstemperatur hergestellt ist.

## Beschreibung

Die Erfindung betrifft ein Konzentrat zur Herstellung wäßriger Dispersionslacke, -farben oder Coatings als Uberdrucklacke für Beschichtungen bedruckter Erzeugnisse, insbsondere Etiketten oder Kartonverpackungen. Weiterhin betrifft die Erfindung ein Verfahren zum Herstellen des Konzentrats sowie die Verwendung des Konzentrats zum Herstellen wäßriger Dispersionslacke, -farben oder Coatings.

Bei der gegenwärtigen Herstellung von wasserlöslichen Beschichtungsmaterialien, wie wasserlösliche Lacke, Farben oder Coatings, enthalten diese Bindemittel, die entweder aufgrund stark polarer Strukturen von Hause aus in Wasser löslich sind oder nach chemischer Reaktion meist unter Bildung von Bindemittelsalzen in den wasserlöslichen Zustand übergehen (Dören/Freitag/Stoye: Wasserlacke: Umweltschonende Alternative für Beschichtungen; Verlag TÜV Rheinland, 1992).

Da erstere Produkte auch nach dem Trocknen des Lackes wasserlöslich bleiben, werden zur Herstellung von wasserlöslichen Produkten meist wasserlösliche Bindemittelsalze verwendet, die durch eine Reaktion von Bindemitteln, die saure Gruppen tragen, mit Aminen oder von Bindemitteln, die basische Gruppen aufweisen, mit Säuren entstehen. Dabei werden als neutralisierende Komponenten überwiegend flüchtige Basen oder Säuren verwendet. Diese sind in der Lage, während der Trocknung aus der Beschichtung zu entweichen, wodurch das wasserunlösliche saure bzw. basische Bindemittel zurückgebildet wird. Gleichzeitig sind Vernetzungsvorgänge möglich.

Als Voraussetzung für eine ausreichende Wasserlöslichkeit werden relativ niedrige Molmassen bei den Bindemittelsalzen von 1.000 bis 6.000 verlangt; in Ausnahmefällen sind bis 20.000 möglich. Darüber hinaus sind die Produkte nicht mehr wasserlöslich, sondern können nur noch dispergiert werden. Wie bei Dispersionsfarben bestehen die Dispersionen aus in Wasser fein verteilten wasserunlöslichen Polymerteilchen mit Molmassen über 100.000. Dören u.a. (Dören/Freitag/Stoye: Wasserlacke:Umweltschonende Alternative für Beschichtungen; Verlag TÜV Rheinland, 1992, Tab.6) zeigen, daß die Verwendung von Dispersionen als wäßriges Beschichtungssystem günstige Produkteigenschaften ermöglicht. Dispersionen benötigen die wenigsten Lösemittel, realisieren hohe Festkörpergehalte und niedrige Viskositäten.

Diese Dispersionen stellen zweiphasige Systeme dar und sind wasserverdünnbar. Sie werden z. B. durch Polymerisation von in Wasser emulgierten Polymeren hergestellt (Adler, H.-J. u.a.: Farbe+Lack 97(1991),103). Als Monomere werden Acrylate, Methacrylate, Styrol, Vinylacetat u.a. verwendet. Darüber hinaus werden neben den Homopolymerisaten vor allem Copolymerisate verwendet, da über die Wahl der Ausgangsstoffe viele Eigenschaften eingestellt werden können.

Die Stabilität von elektrostatisch stabilisierten Dispersionen ist nur gegeben, wenn die Summe der Potentialkurven der elektrostatischen Abstoßung der dispergierten Teilchen und der van-der-Waalschen Anziehung ein Energiemaximum größer 15 kT zeigen (Dispersionen und Emulsionen, Gerhard Lagaly, Steinkopf Darmstadt 1997, S. 75) . Um die Koagulation von Bindemitteln und wäßrigen Beschichtungssystemen zu vermeiden, darf dieses empfindliche Gleichgewicht nicht gestört werden. Faktoren, die eine Koagulation auslösen können, sind Säuren, Salze, wasserlösliche Substanzen, Kolloide mit entgegengesetzten Ladungen, Hitze, Kälte (Gefrieren), hohe Scherkräfte bzw. hoher Druck, Verdampfen von Wasser, elektrischer Strom und extreme Verdünnung mit Wasser. Diese Faktoren sind bei der Herstellung, beim Transport, bei der Lagerung und bei der Verwendung zu beachten.

Beim Trocknen von Harzdispersionen und Dispersionslacken koagulieren die dispergierten Teilchen gewöhnlich ab einem kritischen TS-Gehalt und bilden auf dem Substrat eine sogenannte dichteste Packung. Oberhalb der spezifischen minimalen Filmbildungstemperatur (MFFT) versintern die Teilchen zu einem geschlossenen Film. Die minimale Filmbildungstemperatur der Dispersion kann durch Additive eingestellt werden.

Bei der Herstellung von wasserverdünnbaren Beschichtungsmaterialien, insbesondere sogenannten Überdrucklacken für die Beschichtung von bedruckten Erzegnissen, wie z.B. Etiketten oder Kartonverpackungen, müssen die Komponenten Wasser, ein saures Harz, ein Neutralisationsmittei und eine wäßrige Harzdispersion in einem Rührbehälter eine bis mehrere Stunden dispergiert werden. Dabei müssen die zugegebenen Materialien vermischt, die sich dabei bildenden Agglomerate der Fest-und Flüssigkomponenten wieder aufgespalten und ein stabiler Zustand erreicht werden, in dem keine erneute Agglomeration auftritt. Als weitere Dispergieraggregate werden Dissolver, Walzenstühle, Kugelmühlen und Rührwerksmühlen eingesetzt. Besonders letztere werden intensiv weiterentwickelt, um kürzere Bearbeitungszeiten zu erzielen (Roelofsen,D.P.: Farbe+Lack 97(1991)3,235). Bei den Hochleistungsrührwerken kann bei Farbsystemen auch eine Pastenherstellung möglich werden, jedoch wird das scherempfindliche Bindemittel dann erst in der sich an die Dispergierphase anschließende Auflackphase zugegeben. In dieser Phase sind krasse Konzentrationsänderungen allerdings oft mit einer Vernichtung des Dispergiereffektes verbunden.

Die Beschichtungsmaterialen, insbesondere die Überdrucklacke, werden oft über große Distanzen vom Lackhersteller zum Lackverarbeiter transportiert. Ein großer Teil der Beschichtungsmaterialien ist dabei lediglich Wasser. Darüber hinaus können in den Beschichtungsmaterialien wegen deren wäßriger Basis unter Lichteinwirkung Bakterien wachsen, wodurch die Beschichtungsmaterialen unbrauchbar werden. Die entleerten Transportbehälter werden in einem Kreislaufsystem wieder vom Lackverarbeiter an den Lackhersteller zurückgeliefert. Dabei müssen die Transportbehälter mit Wasser gefüllt sein, damit die im entleerten Transportbehälter verbleibenden Lackrestes während des Transportes nicht antrocknen. Bei diesem Transport wird somit im wesentlichen Wasser hin und her transportiert. Dadurch entstehen unnötig hohe Transportkosten. Außerdem muß das beim Rücktransport der Transport benutzte Wasser vom Lackhersteller auch noch teuer als chemisch belastetes Abwasser entsorgt werden. Es ist daher wünschenswert, den unnötigen Transport von Wasser soweit wie möglich zu vermeiden.

Hiervon ausgehend liegt der Erfindung das Problem zugrunde, ein Konzentrat zur Herstellung wäßriger Dispersionslacke, -farben oder Coatings als Überdrucklack für Beschichtungen bedruckter Erzeugnisse, insbesondere Etiketten oder Kartonverpackungen, anzugeben. Weiterhin liegt der Erfindung das Problem zugrunde, ein Verfahren zum Herstellen des Konzentrats sowie die Verwendung des Konzentrats zum Herstellen wäßriger Dispersionslacke, -farben oder Coatings anzugeben.

Das Problem wird erfindungsgemäß durch ein Konzentrat zur Herstellung wäßriger Dispersionslacke, -farben oder Coatings als Überdrucklacke für Beschichtungen bedruckter Erzeugnisse, insbesondere Etiketten oder Kartonverpackungen, mit einem pulverförmigen Bestandteil, der durch Trocknen einer wäßrigen Harz- oder Latexdispersion unterhalb ihrer minimalen Filmbildungstemperatur hergestellt ist.

Durch Einhaltung einer Trocknungstemperatur unterhalb der minimalen Filmbildungtstemperatur wird auf überraschend einfache Weise eine bei Raumtemperatur feste Konsistenz erzielt. In Pulverform läßt sich diese getrocknete Harz-oder Latexdispersion einfach wieder in Wasser suspendieren und so gegebenenfalls unter Zusatz weiterer Zuschlagstoffe ein wäßriger Dispersionslack, -farbe oder Coating herstellen. Durch den Transport als Konzentrat läßt sich das unnötige hin und her Transportieren von Wasser vermeiden. Insbesondere entfällt das aufwendige Entsorgen chemisch belasteten Wassers. Außerdem müssen bei der Lagerung und beim Transport des Konzentrats keine besonderen Bedingungen eingehalten werden. Es reicht beispielsweise ein herkömmlich verschlossener Plastiksack.

Um aus der getrockneten Harz- oder Latexdispersion einen Dispersionslack, eine Dispersionsfarbe oder ein Coating herzustellen, werden, neben Wasser als Lösungsmittel, häufig weitere Zuschlagstoffe zugesetzt. Hierzu gehören insbesondere Harze. Wäßrige Lösungen von sauren Harzen, insbesondere Polymere der Acrysäure, deren Derivate und Copolymere, werden seit langem als Bindemittel in Lacken, Farben und Coatings, in Konzentrationen von bis zu 40 Massenprozent, eingesetzt. Die obere Grenze hinsichtlich der Konzentration des gelösten Harzes wird durch die für die weitere Verarbeitung erforderliche Viskosität, die mit steigender Konzentration zunimmt, bestimmt.

Saure Harze sind in der Regel nur in der anionischen Form wasserlöslich. Zur Herstellung einer wäßrigen Lösung eines sauren Harzes wird daher das feste Harz in Wasser unter Zusatz einer Base, wie z. B. Ammoniak, gelöst. Die Produktivität bei der Herstellung von Lacken, Coatings und Farben wird häufig durch die relativ geringe Lösegeschwindigkeit der festen, sauren Harze, die als Bindemittel dienen, bestimmt. Um die Lösegeschwindigkeit der festen Harze zu steigern, wird die Lösung in der Regel erwärmt und intensiv, z. B. in Dissolvern mit hohen Drehzahlen von bis zu 1500 U/min, gerührt. Weiterhin werden, um eine hohe Oberfläche zur Verfügung zu stellen, die Harze möglichst fein gemahlen.

Trotz dieser Maßnahmen liegen die Lösegeschwindigkeiten, je nach angestrebter Harzkonzentration, im Bereich von bis zu mehreren Stunden. Nachteilig beim Einsatz einer schon fertig angesetzten Harzlösung. sind der höhere Preis, ein wesentlich höherer Transport- und Lageraufwand, größere Transport- und Lagervolumina sowie eine eingeschränkte Haltbarkeit. Besonders störend macht sich die geringe Lösegewindigkeit dieser Harze beim Anrühren von Lacken, Farben und Coatings aus Konzentraten bemerkbar. Der Anwender eines Lack-, Farben- oder Coatingkonzentrates wünscht ein bei Raumtemperatur sofort lösliches Produkt.

Bei einer Weiterbildung der Erfindung enthält das Konzentrat ein festes pulverförmiges Harzsalz als weiteren Bestandteil, der durch Lösen eines sauren oder basischen Harzes unter Zugabe einer Base (saures Harz) oder Säure (basisches Harz) in Wasser und anschließendes Trocknen hergestellt ist. Die verwendeten Überdrucklacke enthalten häufig neben der wäßrigen Harz- oder Latexdispersion noch Harze in gelöster Form. Als pulverförmiges Harzsalz läßt sich dieser weitere Bestandteil ebenfalls einfach transportieren und schnell wieder in Wasser lösen. Zur Herstellung des Harzsalzes wird abhängig von dem verwendeten Harz bei sauren Harzen eine Base und bei basischen Harzen eine Säure zugegeben. Das so hergestellte Harzsalz löst sich in Wasser, gegebenenfalls nach Ergänzung verdampfter Base bzw. Säure, unter Rühren nahezu spontan. Das Lösen geschieht vorzugsweise unter Erwärmung. Durch Einsatz dieses so hergestellten Harzsalzes lassen sich in wesentlich kürzerer Zeit Harzlösungen herstellen.

Eine Weiterbildung der Erfindung zeichnet sich dadurch aus, daß das Harz ein Copolymer aus
- Styrol und Acrylsäure,
- Styrol und Acrylsäurederivat,
- Acrylsaure,
- Acrylsäurederivat, oder
- Acrysäure und Acrylsäurederivat
und/oder ein Salz eines der vorgenannten Copolymere ist. geeignet. Diese Copolymere haben besonders gute Eigenschaften für die Verwendung als Überdrucklacke.

Aus dem gleichen Grund kann auch die wäßrige Harzdispersion aus einem Copolymer aus
- Styrol und Acrylsäure,
- Styrol und Acrylsäurederivat,
- Acrylsäure,
- Acrylsäurederivat, oder
- Acrylsäure und Acrylsäurederivat
hergestellt sein.

Für das Harz und die Harzdispersion können die gleichen Copolymere verwendet werden. Es können aber auch unterschiedliche Copolymere für das Harz und die Harzdispersion verwendet werden. Neben den vorgenannten Copolymeren könne auch weitere künstliche Harze oder natürliche Harze verwendet werden.

Bei dem Verfahren zum Herstellen bei Raumtemperatur fester Konzentrate für wäßrige Dispersionslacke, -farben oder Coatings als Überdrucklacke für Beschichtungen bedruckter Erzeugnisse, insbesondere Etiketten oder Kartonverpackungen, wird eine wäßrige Harz- oder Latexdispersion unterhalb ihrer minimalen Filmbildungstemperatur getrocknet. Dadurch wird auf einfache Weise ein Konzentrat erzeugt, das sich leicht und schnell wieder in Wasser zu einem wäßrigen Dispersionlack, -farbe oder Coating aufrühren läßt.

Bei einer Weiterbildung des erfindungsgemäßen Verfahrens wird ein sauren oder basisches Harz unter Zugabe einer Base (saures Harz) oder Säure (basisches Harz) vorzugsweise unter Erwärmung in Wasser gelöst und anschließend zu einem Harzsalz getrocknet, das anschließend mit der getrockneten Harz- oder Latexdispersion vermischt wird. Die Base dient als Neutralisationsmittel für das saure Harz. Die Säure dient als Neutralisationsmittel für das basische Harz. Während des Trocknens verdampft das Wasser sowie ein Teil der Base bzw. Säure. Es ist auch denkbar, das gelöste Harz zusammen mit der wäßrigen Harz- oder Latexdispersion zu trocken.

Vorzugsweise wird das Harz durch die Base bzw. die Säure mindestens vollständig neutralisiert. Auf diese Weise wird eine gute Ausbeute an Harzsalz erreicht.

Bei einer Weiterbildung wird bei einem sauren Harz Ammoniak oder Ammoniakwasser zugegeben. Ammoniak läßt sich einfach handhaben, ist ökologisch unbedenklich und liefert gute Ergebnisse. Außerdem ist Ammoniak flüchtig und läßt sich somit durch Trocknen vollständig aus dem Konzentrat entfernen.

Das durch das erfindungsgemäße Verfahren hergestellte Konzentrat hat vorzugsweise einen Trockensubstanzgehalt von etwa 99 Massenprozent.

Das erfindungsgemäße Konzentrat läßt sich zum Herstellen wäßriger Dispersionslacke, -farben oder Coatings als Überdrucklacke für Beschichtungen bedruckter Erzeugnisse, insbesondere Etiketten oder Kartonverpackungen, verwenden, wobei das Konzentrat in Wasser unter Zugabe einer Base, insbesondere Ammoniak oder Ammoniakwasser, gelöst oder suspendiert wird. Dadurch läßt sich vor Ort, also beim Verarbeiter, ein gebrauchsfertiger wäßriger Dispersionslack, -farbe oder ein Coating herstellen. Dabei sollte das Konzentrat unter ständigem Rühren gelöst bzw. suspendiert werden. Als Neutralisationsmittel eignet sich ebenfalls Ammoniak oder Ammoniakwasser. Besonders einfach und wirkungsvoll läßt sich eine 24%-ige Ammoniaklösung (ammoniakwasser) verwenden.

Vorzugsweise werden dem Wasser außerdem Additive und/oder eine Wachsdispersion vor dem Lösen oder Suspendieren des Konzentrats zugesetzt. Dabei kann die gesamte benötigte Wassermenge in einem Tank vorgelegt und anschließend die Additive und/oder die Wachsdispersion zugesetzt werden. Dadurch erhält man eine stark verdünnte Lösung bzw. Dispersion. Konzentrationsspitzen lassen sich auf diese Weise vermeiden. Dem Wasser kann dabei auch gleich die zum Einstellen des pH-Wertes erforderliche Ammoniakmenge zugesetzt werden. In diese so vorbereitete Lösung bzw. Dispersion kann dann das Konzentrat einfach eingerührt werden.

Zur weiteren Veranschaulichung der Erfindung werden nachfolgende Herstellungs- und Verwendungsbeispiele für das erfindungsgemäße Produkt angegeben, auf das sich die Erfindung selbstverständlich nicht beschränkt.

Eine handelsübliche, für die Herstellung wäßriger Dispersionsfarbe, -lacke oder Coatings geeignete Dispersion mit einer Mindestfilmbildungstemperatur von 85°C wird bei Raumtemperatur getrocknet. 11,5 kg getrocknete Dispersion werden nach einem ersten Ausführungsbeispiel mit 5 kg festem Harz zu einem Konzentrat vermischt.

Nach einem zweiten Ausführungsbeispiel wird das Harz zunächst unter Zugabe eines Neutralisationsmittels in Wasser gelöst. Diese Lösung wird sodann eingedampft. Dabei verdampft neben dem Wasser auch ein Teil des Neuralisationsmittels, so daß ein Harzsalz, eventuell mit noch freien Säuregruppen, übrig bleibt. 5 kg dieses Harzsalzes werden dann mit 11,5 kg der getrockneten Harzdispersion aus dem ersten Ausführungsbeispiel zu einem Konzentrat vermischt.

Nach einem weiteren Ausführungsbeispiel werden 5 kg einer Mischung aus dem festen Harz gemäß dem ersten Ausführungsbeispiel und dem Harzsalz aus dem zweiten Ausführungsbeispiel mit 11,5 kg der getrockneten Harzdispersion vermischt.

Das gemäß der vorgenannten Ausführungsbeispiele erhaltene, feste Konzentrat wird in geeigneten Transportbehältern vom Hersteller zum Verarbeiter transportiert. Beim Verarbeiter wird das Konzentrat mit 25 kg Wasser, und 9,5 kg Additiven, zu denen beispielsweise eine Wachsdispersion, Entschäumer und Netzmittel gehören, und 1,1 kg Neutralisationsmittel unter Rühren gelöst bzw. suspendiert. Die so hergestellte wäßrige Dispersion ist besonders als wäßriger Überdrucklack für die Beschichtung von Kartonverpackungen geeignet. Der aufgestrichene Überdrucklack verleiht der Kartonverpackung einen hervorragenden Glanz und ist insbesondere als Überdrucklack für die Beschichtung von Kartonverpackungen hervorragend geeignet.

Als Harz, Harzsalz bzw. zur Herstellung der wäßrigen Harzdispersion werden Copolymere aus
- Styrol und Acrylsäure,
- Styrol und Acrylsäurederivate,
- Acrylsäure,
- Acrylsäurederivate, oder
- Acrylsäure und Acrylsäurederivate
verwendet. Dabei können als festes Harz oder für das Harzsalz einerseits sowie für die Harzdispersion andererseits sowohl die gleichen als auch unterschiedliche Copolymere verwendet werden. Allerdings haben auch gleiche Copolymere als festes Harz oder für das Harzsalz einerseits und das Harz für die Herstellung der Harzdispersion andererseits unterschiedliche Kettenlängen, nämlich das Harz bzw. für das Harzsalz eine kürzere Kettenlänge als das Harz für die Harzdispersion, so daß sie niemals genau identisch sind.

Als Neutralisationsmittel dient eine 24%ige Ammoniaklösung. Dieses Neutralisationsmittel wird in einer ausreichenden Menge zugegeben, um das feste, saure Harz mindestens vollständig zu neutralisieren. Dieses gilt sowohl für die Herstellung des Harzsalzes als auch für die Herstellung des fertigen Dispersionslacks, -farbe oder Coatings aus dem Konzentrat.

Das Additiv ist vor allem eine Wachsemulsion. Die vorliegenden Lacke, Farben oder Coatings enthalten üblicherweise weitere Additive, wie beispielsweise Entschäumer oder Netzmittel.

## Patentansprüche

1. Konzentrat zur Herstellung wäßriger Dispersionslacke, -farben oder Coatings als Überdrucklacke für Beschichtungen bedruckter Erzeugnisse, insbesondere Etiketten oder Kartonverpackungen, mit einem pulverförmigen Bestandteil, der durch Trocknen einer wäßrigen Harz- oder Latexdispersion unterhalb ihrer minimalen Filmbildungstemperatur hergestellt ist.

2. Konzentrat nach Anspruch 1, gekennzeichnet durch ein festes pulverförmiges Harzsalze als weiteren Bestandteil, der durch Lösen eines sauren oder basischen Harzes unter Zugabe einer Base (saures Harz) oder Säure (basisches Harz) in Wasser und anschließendes Trocknen hergestellt ist.

3. Konzentrat nach Anspruch 1 oder 2, dadurch gekennzeichnet, daß das Harz ein Copolymer aus
- Styrol und Acrylsäure,
- Styrol und Acrylsäurederivat,
- Acrylsäure,
- Acrylsäurederivate, oder
- Acrylsäure und Acrylsäurederivat
und/oder ein Salz eines der vorgenannten Copolymere ist.

4. Konzentrat nach einem der Ansprüche 1 bis 3, dadurch gekennzeichnet, daß die wäßrige Harzdispersion aus einem Copolymer aus
- Styrol und Acrylsäure,
- Styrol und Acrylsäurederivat,
- Acrylsäure,
- Acrylsäurederivate, oder
- Acrylsäure und Acrylsäurederivat
hergestellt ist.

5. Verfahren zum Herstellen bei Raumtemperatur fester Konzentrate für wäßrige Dispersionslacke, -farben oder Coatings als Überdrucklacke für Beschichtungen bedruckter Erzeugnisse, insbesondere Etiketten oder Kartonverpackungen, bei dem eine wäßrige Harz- oder Latexdispersion unterhalb ihrer minimalen Filmbildungstemperatur getrocknet wird.

6. Verfahren nach Anspruch 5, dadurch gekennzeichnet, daß ein saures oder basisches Harz unter Zugabe einer Base (saures Harz) oder Säure (basisches Harz) vorzugsweise unter Erwärmung in Wasser gelöst und anschließend zu einem Harzsalz getrocknet wird, das anschließend mit der getrockneten Harz- oder Latexdispersion vermischt wird.

7. Verfahren nach Anspruch 6, dadurch gekennzeichnet, daß das Harz durch die Base bzw. Säure mindenstens vollständig neutralisiert wird.

8. Verfahren nach Anspruch 6 oder 7, dadurch gekennzeichnet, daß bei einem sauren Harz Ammoniak oder Ammoniakwasser zugegeben wird.

9. Verwendung des Konzentrats nach einem der Ansprüche 1 bis 4 zum Herstellen wäßriger Dispersionslacke, -farben oder Coatings als Überdrucklacke für Beschichtungen bedruckter Erzeugnisse, insbesondere Etiketten oder Kartonverpackungen, wobei das Konzentrat in Wasser unter Zugabe einer Base, insbesondere Ammoniak oder Ammoniakwasser, gelöst oder suspendiert wird.

10. Verwendung nach Anspruch 9, dadurch gekennzeichnet, daß dem Wasser außerdem Additive und/oder eine Wachsdispersion vor dem Lösen oder Suspendieren des Konzentrats zugesetzt wird.
